Europäisches Patentamt

European Patent Office

Office européen des brevets

(19)

(11) Veröffentlichungsnummer: **0 018 316**
**A1**

(12) # EUROPÄISCHE PATENTANMELDUNG

(21) Anmeldenummer: **80810085.3**

(22) Anmeldetag: **07.03.80**

(51) Int. Cl.³: **G 01 C 3/02, G 02 B 7/00**

(30) Priorität: **11.04.79 CH 3430/79**

(43) Veröffentlichungstag der Anmeldung: **29.10.80**
Patentblatt 80/22

(84) Benannte Vertragsstaaten: **DE SE**

(71) Anmelder: **KERN & CO. AG Werke für Präzisionsmechanik Optik und Elektronik, CH-5001 Aarau (CH)**

(72) Erfinder: **Häfliger, Erwin, Grenzweg 5, CH-5039 Buchs/AG (CH)**
Erfinder: **Hinden, Fritz, Landhausweg 53, CH-5000 Aarau (CH)**
Erfinder: **Lardelli, Aldo, Krebsenweg 917, CH-5040 Schöftland (CH)**

(74) Vertreter: **Seeger, Jan (DE), c/o Kern & Co. AG CH-5001 Aarau, (CH)**

(54) **Reflektor zur elektrooptischen Entfernungsmessung.**

(57) Ein Reflektor zur elektrooptischen Distanzmessung ist mit einem Winkelvisier kombiniert. Er kann daher so aufgestellt werden, daß die Richtungen zu den Endpunkten (3, 4) der Meßstrecke einen rechten Winkel einschließen. Dies vereinfacht die Distanzmessung, wenn die Endpunkte zur Aufstellung von Reflektoren nicht geeignet sind oder wenn zwischen ihnen keine Sichtverbindung besteht.

- 1 -

## Reflektor zur elektrooptischen Entfernungsmessung

Die Erfindung bezieht sich auf einen Reflektor zur elektrooptischen Messung der Entfernung zwischen einem ersten und einem zweiten Endpunkt einer Messstrecke in Verbindung mit einer Messstation am ersten Endpunkt, mit einem Winkelvisier.

Bei der elektrooptischen Distanzmessung ist das Problem bekannt, dass man den Reflektor unter gewissen Umständen nicht am Endpunkt der Messstrecke aufstellen kann. Liegt der Streckenendpunkt z.B. in einer Wand oder in einer Hausecke, so kann die räumliche Form des Reflektors verhindern, dass der Bezugspunkt des Reflektors in oder über dem Streckenendpunkt aufgestellt wird. Auch kommt es vor, dass Hindernisse auf der Messstrecke die Sichtverbindung zwischen den Endpunkten stören. Gemäss dem Stand der Technik legt man im ersten Fall dafür vorgesehene Punkte des Reflektorgehäuses mit bekannten Exzentrizitäten in den Streckenendpunkt. Zu diesem

0018316

Zweck kann man bekanntlich in die Reflektorkippachse einsetzbare Winkelvisiere verwenden, welche gleichzeitig zur Orientierung des Reflektors
auf die Messstation dienen. Die bekannten Exzentrizitäten liegen dann
entweder parallel oder senkrecht zur Messstrecke. Für die im zweiten
Fall genannte Situation ist es bekannt, mittels eines Pentaprismas oder
dergleichen einen Punkt ausserhalb der Messstrecke mit Sichtverbindung
zu den beiden Streckenendpunkten derart festzulegen, dass die Richtungen
zu den Endpunkten einen rechten Winkel einschliessen und den Reflektor in
dem so bestimmten Punkt aufzustellen. Gemessen werden die Distanzen der
Endpunkte zu diesem Einschaltpunkt, und die Länge der Messstrecke wird
dann aus den gemessenen Distanzen berechnet.

Nachteilig an den beschriebenen bekannten Methoden ist der Aufwand an
Arbeitszeit und Material.

Aufgabe der Erfindung ist es, einen Reflektor zur elektrooptischen Entfernungsmessung anzugeben, welcher ohne zusätzliche Hilfsmittel und in
einfacher Weise sowohl in der Nähe beschränkt zugänglicher Punkte mit
bekannter Exzentrizität als auch auf Einschaltpunkten mit vorbestimmter
Richtungsbeziehung zur Messstrecke orientiert und aufgestellt werden
kann.

Gelöst wird diese Aufgabe durch einen Reflektor der eingangs genannten
Art, der sich auszeichnet durch eine derartige Ausbildung, dass ein Beobachter bei exzentrischer Aufstellung des Reflektors in Bezug auf den
zweiten Endpunkt der Messstrecke im Winkelvisier gleichzeitig Markierungselemente am ersten und am zweiten Endpunkt beobachten kann und dass die auf einen Bezugspunkt am Reflektor bezogenen Richtungen der Markierungselemente bei Koinzidenz ihrer Bilder einen rechten Winkel einschliessen. Eine vorteilhafte Ausführungsform des erfindungsgemässen Reflektors ist gekennzeichnet durch ein um eine Kippachse schwenkbares Tripelprisma zur Reflexion des Messstrahles zum ersten Endpunkt der Messstrecke und durch ein in der Nähe des Tripelprismas als Winkelvisier angeordnetes Pentaprisma derart, dass der Beobachter bei rückwärtigem Einblick in Richtung auf den ersten Streckenendpunkt das Markierungselement am zweiten Streckenendpunkt unter 90°-Umlenkung durch das Pentaprisma und das Markierungselement der Messstation am ersten Streckenendpunkt direkt erblickt.

Eine weitere Ausführungsform des Reflektors zeichnet sich dadurch aus, dass das Pentaprisma nur einen Teil des Gesichtsfeldes abdeckt und dass der erste Streckenendpunkt bei geometrischer Teilung des Gesichtsfeldes nicht durch das Tripelprisma hindurch beobachtet wird. Gemäss einer erfindungsgemässen Variante ist der Reflektor so ausgeführt, dass er ein Gehäuse mit je einer seitlichen Oeffnung im Bereich der Kippachse aufweist und dass das Winkelvisier mit einer je nach Bedarf in die Oeffnungen einsetzbaren bzw. wieder herausnehmbaren Fassung versehen ist.

Ferner ist der Reflektor zweckmässig derart beschaffen, dass die seitlichen Oeffnungen des Gehäuses nach Art von Bajonettverschlüssen ausgebildet sind.

Die Erfindung wird nachfolgend anhand von in der Zeichnung schematisch dargestellten Ausführungsbeispielen näher beschrieben. Es zeigen

0018316

Fig. 1 die Verwendung eines erfindungsgemässen Reflektors zur elektrooptischen Messung einer Distanz ohne Sichtverbindung der Endpunkte,

Fig. 2 das Gesichtsfeld eines Beobachters am Reflektor bei Aufstellung
gemäss Fig. 1 und

Fig. 3 eine erfindungsgemässe Ausführungsform des Reflektors mit Tripelprisma und Pentaprisma im Einzelnen.

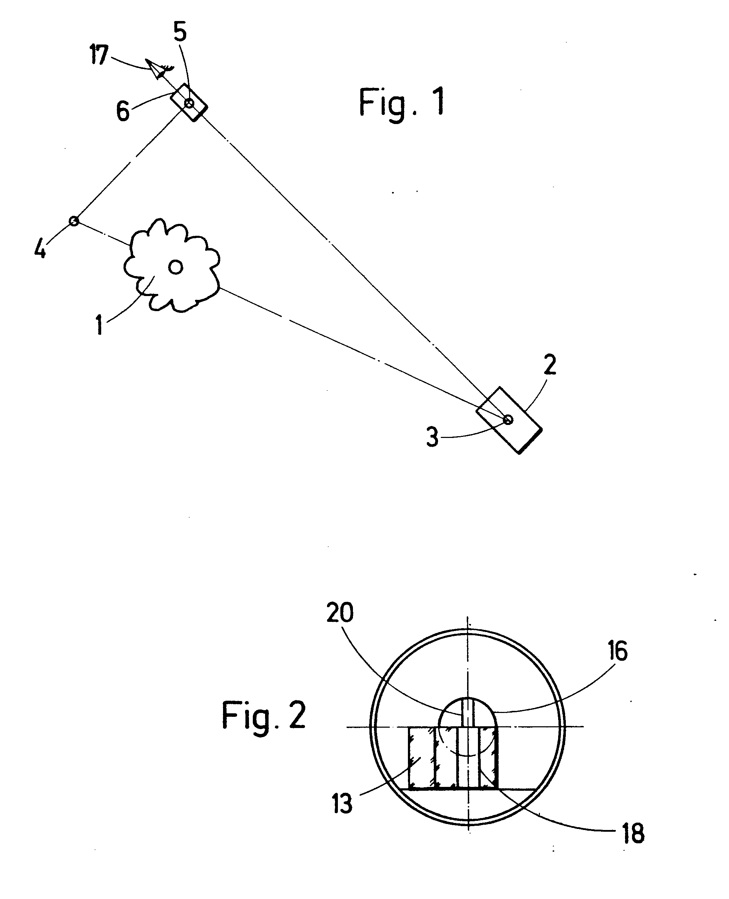

Bei der elektrooptischen Distanzmessung wird bekanntlich ein in seiner
Helligkeit modulierter, meist infraroter Lichtstrahl von der Messsation
am einen Streckenendpunkt zum anderen Streckenendpunkt hin ausgesendet,
dort an einem zu diesem Zweck aufgestellten Reflektor wieder zur Messstation reflektiert und mittels elektrischer Schaltungen bezüglich seiner
Laufzeit ausgewertet. Obwohl als Reflektoren meist Tripelspiegel verwendet werden, welche den Messstrahl innerhalb gewisser Grenzen
orientierungsunabhängig in sich selbst (also um 180$^{\circ}$) reflektieren,
orientiert man den Reflektor schon zur Erzielung ausreichend intensiver
Reflexionen möglichst zur Messstation hin. Kann, wie in Fig. 1 dargestellt, die Messung wegen eines Hindernisses 1 nicht direkt zwischen
der Messstation 2 am Endpunkt 3 und dem zweiten Endpunkt 4 der Messstrecke durchgeführt werden, so schaltet man einen Zwischenpunkt 5
mit Sichtverbindung zu den Endpunkten 3 und 4 ein und zwar zweckmässig
derart, dass der Winkel 3, 5, 4 ein Rechter ist. Gemessen werden dann
die Distanzen 3, 5 und 4, 5 unter Aufstellung des Reflektors 6 am
Punkt 5.

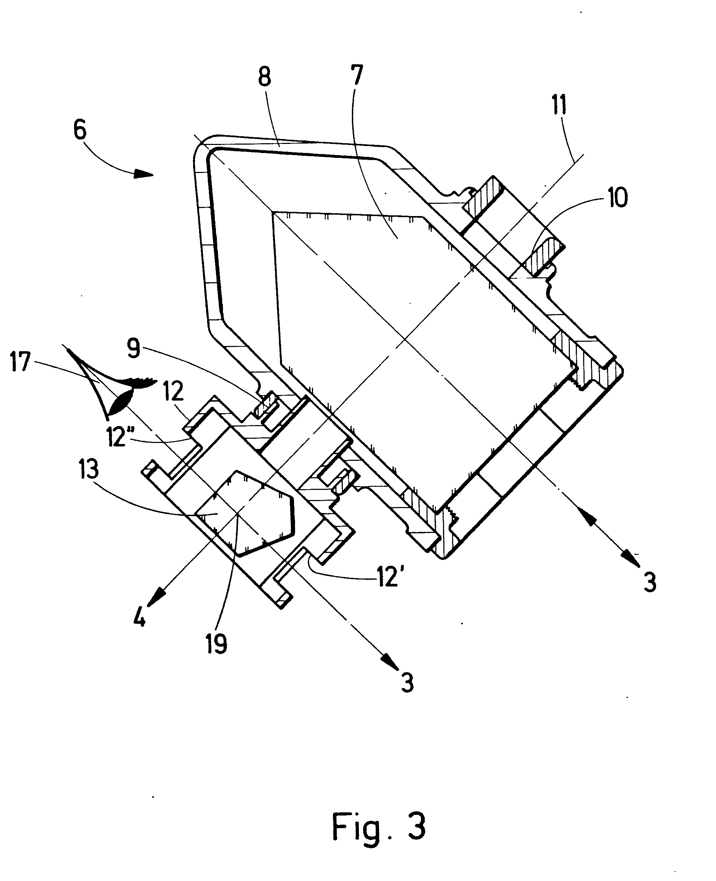

Dieser Aufgabe dient ein erfindungsgemäss ausgebildeter Reflektor 6, wie er gemäss Fig. 3 im Einzelnen dargestellt ist. Ein Tripelprisma 7 dient der Reflexion des vom Punkt 3 her einfallenden Messstrahles. Das Gehäuse 8 des Reflektors 6 ist mit seitlichen Oeffnungen 9 und 10 im Bereich seiner Kippachse 11 versehen. In die Oeffnung 9 ist ein in einer Fassung 12 befindliches Pentaprisma 13 als Winkelvisier eingesetzt. Die Fassung 12 besitzt einen auf den Punkt 3 orientierten Ausblick 12', sowie einen diametral gegenüberliegenden Einblick 12", die zweckmässig als Kreuzschlitze ausgebildet sind. Dadurch ergibt sich ein Gesichtsfeld 16 für einen Beobachter 17, wie es Fig. 2 zeigt. Das Pentaprisma 13 deckt es nur im unteren Bereich ab und ruft so eine geometrische Teilung des Gesichtsfeldes 16 hervor. Durch die Fassung 12 hindurch erblickt der Beobachter 17 das Bild 20 einer Markierung am Streckenendpunkt 3 und durch das Pentaprisma 13 unter 90$^{o}$ Umlenkung das Bild 18 einer Markierung am Streckenendpunkt 4 .

Bei Koinzidenz der Bilder 20, 18 im Gesichtsfeld 16 schliessen also die Ziellinien in ihrem Schnittpunkt 19 einen rechten Winkel ein und das Tripelprisma 7 ist auf die Messstation 2 im Streckenendpunkt 3 ausgerichtet. Damit ist die korrekte Aufstellung des Reflektors 6 durchgeführt und die elektrooptische Messung der Distanz 3,5 kann an der Messsation ausgelöst werden.

Die Gehäuseöffnungen 9, 10 des Reflektorgehäuses 8 sind, wie nicht im Einzelnen dargestellt, nach Art von Bajonettverschlüssen ausgebildet, derart dass mehrere Reflektoren mit gemeinsamer Kippachse zusammensteckbar sind. Das Pentaprisma wird in diesem Fall in den inneren, dem Streckenendpunkt 4 zugewendeten Reflektor eingesetzt, und die Markierung am Punkt 4 wird durch das Pentaprisma 13 hindurch angezielt. Liegt der Endpunkt 4 auf der anderen, der Oeffnung 10 benachbarten Seite des Reflektors 6, so wird das Pentaprisma 13 in die Oeffnung 10 eingesetzt, wobei es nunmehr den oberen Teil des Gesichtsfeldes 16 (Fig. 2) abdeckt. Der Endpunkt 3 wird dann durch den unteren Teil hindurch beobachtet.

Auf diese Weise lassen sich auch bereits vorhandene Reflektoren mit geringem Aufwand erfindungsgemäss nachrüsten, sofern sie Gehäuseöffnungen in der Kippachse zum Einsatz von Winkelvisieren bekannter Art aufweisen.

Patentansprüche
_____

1. Reflektor zur elektrooptischen Messung der Entfernung zwischen einem ersten und einem zweiten Endpunkt einer Messstrecke in Verbindung mit einer Messstation am ersten Endpunkt, mit einem Winkelvisier, gekennzeichnet durch eine derartige Ausbildung, dass ein Beobachter (17) bei exzentrischer Aufstellung des Reflektors (6) in Bezug auf den zweiten Endpunkt (4) der Messstrecke im Winkelvisier (16) gleichzeitig Markierungselemente (20, 18) am ersten (3) und am zweiten Endpunkt (4) beobachten kann und dass die auf einen Bezugspunkt (19) am Reflektor (6) bezogenen Richtungen der Markierungselemente bei Koinzidenz ihrer Bilder (20, 18) einen rechten Winkel einschliessen.

2. Reflektor nach Patentanspruch 1, gekennzeichnet durch ein um eine Kippachse (11) schwenkbares Tripelprisma (7) zur Reflektion des Messstrahles zum ersten Endpunkt (3) der Messstrecke und durch ein in der Nähe des Tripelprismas (7) als Winkelvisier angeordnetes Pentaprisma (13) derart, dass der Beobachter (17) bei rückwärtigem Einblick in Richtung auf den ersten Streckenendpunkt (3) das Markierungselement (18) am zweiten Streckenendpunkt (4) unter $90^o$-Umlenkung durch das Pentaprisma (13) und das Markierungselement (20) der Messstation (2) am ersten Streckenendpunkt (3) direkt erblickt.

3. Reflektor nach Patentanspruch 2, gekennzeichnet durch ein Gehäuse (8) mit je einer seitlichen Oeffnung (9, 10) im Bereich der Kippachse und durch eine je nach Bedarf in eine der Oeffnungen (9, 10) einsetzbare bzw. wieder herausnehmbare Fassung (12) für das Winkelvisier.

BAD ORIGINAL

4. Reflektor nach Patentanspruch 3, dadurch gekennzeichnet, dass die seitlichen Oeffnungen des Gehäuses nach Art von Bajonettverschlüssen ausgebildet sind.

5. Reflektor nach Patentanspruch 2, gekennzeichnet durch ein Pentaprisma, welches beim Kippen des Tripelprismas nicht mit verschwenkt wird.

6. Reflektor nach Patentanspruch 1, gekennzeichnet durch ein Winkelvisier (16) mit einer Fassung (12), welche auf ihrem Umfang Ein- und Ausblicksöffnungen (12", 12') für den Beobachter (17) aufweist.

7. Reflektor nach Patentanspruch 6, gekennzeichnet durch Ein- und Ausblicksöffnungen (12", 12') welche derart als Zielmittel ausgebildet sind, dass sie eine Orientierung des Reflektors (6) auf den ersten Streckenendpunkt (3) möglich machen.

0018316

-1/2-

Fig. 1

Fig. 2

Fig. 3

| Kategorie | Kennzeichnung des Dokuments mit Angabe, soweit erforderlich, der maßgeblichen Teile | betrifft Anspruch |
|---|---|---|
| | DE - A1 - 2 362 638 (K. BLACHNITZKY) <br> * Anspruch 1 * <br> -- | 1 |
| | US - A - 3 720 467 (J.D. STRONG) <br> * Fig. 2 und 5 * <br> -- | 1,2 |
| | DE - U - 1 769 995 (A. KÖNIG) <br> * Seite 4 unten * <br> -- | 3-7 |
| A | DE - A1 - 2 354 934 (J. DICKE) <br> * ganzes Dokument * <br> -- | |
| A | DE - U - 1 827 958 (M. HENSOLDT & SÖH- <br> NE, OPTISCHE WERKE AG) <br> * Anspruch 8 * <br> -- | |
| A | DE - B - 1 199 016 (JENOPTIK JENA GMBH) <br> * ganzes Dokument * <br> -- | |
| A | DE - C - 360 586 (R. STÜTZER) <br> * ganzes Dokument * <br> ---- | |

**EINSCHLÄGIGE DOKUMENTE**

**KLASSIFIKATION DER ANMELDUNG (Int.Cl.³)**

G 01 C   3/02
G 02 B   7/00

**RECHERCHIERTE SACHGEBIETE (Int. Cl.³)**

G 01 C   3/00
G 02 B   5/12
G 02 B   7/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X  Der vorliegende Recherchenbericht wurde für alle Patentansprüche erstellt.

| Recherchenort | Abschlußdatum der Recherche | Prüfer |
|---|---|---|
| Berlin | 16-07-1980 | FUCHS |

EPA form 1503.1   06.78